# EUROPEAN PATENT SPECIFICATION

(11) **EP 1 306 150 B1**
(45) Date of publication and mention of the grant of the patent: **21.03.2012**
(21) Application number: 01947970.8
(22) Date of filing: 11.07.2001
(51) Int. Cl.: B23B 27/14, C23C 16/30

(54) **COATED CUTTING TOOL**
BESCHICHTETES SCHNEIDWERKZEUG
OUTIL COUPANT POURVU D'UN REVETEMENT

(30) Priority: 12.07.2000 JP 2000211832
(43) Date of publication of application: 02.05.2003
(73) Proprietor: Sumitomo Electric Industries, Ltd., Osaka-shi, Osaka 541-0041 (JP)
(72) Inventor: YAMAGATA, Kazuo, Sumitomo Electric Ind. Ltd., Itami-shi, Hyogo 664-0016 (JP); IKEGAYA, Akihiko, Sumitomo Electric Ind. Ltd., Itami-shi, Hyogo 664-0016 (JP)
(74) Representative: Cross, Rupert Edward Blount
(86) International application number: PCT/JP2001/006000
(87) International publication number: WO 2002/004156

(56) References cited:
- EP-A- 0 298 729
- EP-A- 0 693 574
- EP-A1- 0 298 729
- EP-A1- 0 878 563
- EP-A2- 0 685 572
- JP-A- 5 057 507
- JP-A- 10 138 034
- US-A- 5 945 207

## Description

### Technical Field

The present invention relates to a coated cutting tool in which a hard coating layer having excellent wear resistance is formed.

### Background Art

There have been attempts to improve fracture resistance and wear resistance of super hard alloy cutting tools and lengthen the life of tools by depositing a coating layer of titanium carbide, titanium nitride, titanium carbonitride, aluminum oxide, or the like on the surface of a WC-group sintered hard alloy or cermet substrate.

When cutting is carried out, particularly, when a workpiece which easily welds is cut by using these coated cutting tools, problems have frequently occurred in which the coating layer spalls away due to such welding and adhesion, and furthermore, fracturing of the substrate progresses, resulting in a decrease in the life of the tools.

In order to solve these problems, Japanese Patent Nos. 2105396 and 2825693 disclose a technique for suppressing welding and adhesion of a workpiece and enhancing wear resistance and toughness by improving surface roughness by mechanically grinding the surface of the coating layer at the blade-edge ridge of a cutting tool.

However, these techniques are insufficient to suppress the shortening of the tool life due to the progress of wear accompanying layer spalling at the rake face side and layer chipping at the flank side particularly in the case of cutting a workpiece of ductile cast iron, stainless steel, Inconel, or the like which easily welds and adheres.

Furthermore, since the surface roughness of a workpiece deteriorates, the desired roughness of the machined surface cannot be obtained in the case of finishing in which machining accuracy is required.

US-A-5,945,207 discloses a coated cutting insert. EP-A-0 298 729 discloses a cutting tool.

Recently, considering environmental problems, cutting without using a cutting oil (dry cutting) has become prevalent. However, in this case, due to loss of the lubricating effect of a cutting oil, welding and adhesion of a workpiece accelerates, and accordingly, decrease in the life and deterioration in roughness of machined surface have come into question.

Therefore, the main object of the invention is to provide a coated cutting tool in which fracture resistance and wear resistance are simultaneously realized, tool life is improved, and surface roughness of machined workpiece is improved.

### Disclosure of Invention

The present invention provides a coated cutting tool according to claim 1 of the claims appended hereto.

When cutting a workpieces of ductile cast iron, stainless steel, inconel, or the like, which easily welds and adheres, in a range of 200 µm from the rake face side boundary of the blade-edge ridge toward the rake face side, chips weld and adhere to the coating layer, and when the adhered matter comes off, the coating layer also spalls, resulting in damage to the substrate. Also in a range of at least 50 µm from the flank side boundary of the same blade-edge ridge toward the flank side, chips weld and adhere due to micro-chipping of the coating layer and abnormal wearing progresses, or the surface unevenness of the coating layer and adhered matter on the surface are transferred onto the workpiece, resulting in deterioration in surface roughness of the machined workpiece.

Therefore, the hard coating layer at the blade-edge ridge, a range of 200 µm or more and 2000 µm or less from the rake face side boundary of the same blade-edge ridge toward the rake face side, and a range of 50 µm or more and 400 µm or less from the flank side boundary of the same blade-edge ridge toward the flank side is formed to be substantially 0.2 µm or less in surface roughness (Rmax) (the reference length is set to 5 µm), whereby such welding and adhesion of a workpiece and such transferring onto the workpiece are prevented. Thus, the tool life can be improved by increasing fracture resistance and wear resistance simultaneously, and the surface roughness of a machined workpiece can also be improved. Particularly, this effect is more remarkable in the case of dry cutting. It is desirable that the hard coating layer comprises one or more kinds of substances selected from the group consisting of carbides, carbonitrides, borides, and oxides of one or more kinds of metal elements selected from the periodic table IVa, Va, and VIa groups, Al, and Si, and the solid solutions thereof.

The surface of the hard coating layer having a substantially smooth surface roughness means that the surface does not necessarily have predetermined surface roughness in the whole of the above-mentioned defined ranges, but in an area ratio of approximately 50% or more of the whole defined ranges.

As the invention is applied to a non-ground type tool in which the flank of the substrate has an as-sintered surface, the effect of the present invention is more remarkable. Recently, for reducing manufacturing costs, non-ground type tools have widely diffused, in which the tool flank side has an as-sintered surface. In this case, tool surface unevenness may be transferred onto a workpiece, or welding and adhesion occur, resulting in abnormal wear and deterioration in surface roughness of the workpiece. Application of the present invention to such case therefore produces more remarkable effects.

The range of the smooth surfaces is set to be a range in which crater friction and adhesion occur due to friction with chips in the section from the blade-edge ridge toward the rake face side. The range of 200 µm or more and 2000 µm or less from the rake face side boundary of the blade-edge ridge toward the rake face side must always be a smooth formation, however, depending on the workpiece and cutting conditions, it is further desirable that a range of 500 µm from the rake face side boundary of the blade-edge ridge toward the rake face is a smooth formation.

At the flank side, the range for a smooth formation is set to a range in which chips due to micro-chipping of the coating layer may weld, adhere, and cause abnormal wear to progress, or surface unevenness or adhered matter on the surface of the coating layer may be transferred onto a workpiece and cause the surface roughness of the machined workpiece to deteriorate. A range of 50 µm or more and 400 µm or less from the flank side boundary of the blade-edge ridge toward the flank side must always be a smooth formation. It is more desirable that this range be expanded to a range of 200 µm from the flank side boundary of the blade-edge ridge toward the flank side.

The setting of a smooth surface roughness (Rmax) to 0.2 µm or less (the reference length is set to 5 µm) is required because desired effects cannot be obtained if the surface roughness exceeds 0.2 µm. It is more preferable that a surface roughness be smaller than this.

As a method for measuring the surface roughness, the section of the hard coating layer may be observed by means of a scanning electron microscope photograph. The hard phase particles of sintered hard alloys and cermet are generally in a range of 3-5µm, and the particles project and form an undulation with a height of 2-3µm and a width of 5-7µm. Therefore, the reference length is set to 5 µm to specify the surface roughness, eliminating influences from such undulation.

The hard coating layer may be a single layer or a lamination layer. In the case of a lamination layer, it is desirable that the layer comprises an inner layer comprising at least one or more layers of Ti (CwBxNyOz) (herein, w+x+y+z=1, w,x,y,z≥0), a middle layer composed of an aluminum oxide layer, and an outer layer made from TiCxNyO_{1-x-y} or ZrCxNyO_{1-x-y} (0≤x,y, x+y≤1).

The inner layer comprises one or more layers of Ti (CwBxNyOz) (herein, w+x+y+z=1, w,x,y,z≥0) which is high in hardness and abrasion resistance, by which high wear resistance can be obtained. Particularly, in a case where titanium carbonitride having a film thickness of 2-20 µm and a columnar crystal structure is disposed in the inner layer, wear resistance and chipping resistance can be simultaneously realized, and damage from the aluminum oxide of the outer layer can be prevented in intermittent cutting or cutting for machining parts. In addition, high wear resistance can be obtained while preventing destruction of the film of the inner layer, by which tool performance can be significantly improved. If the film thickness of titanium carbonitride is less than 2µm, wear resistance is insufficient, and if the thickness exceeds 20 µm, the strength of the coating layer decreases.

Furthermore, when an innermost layer contacting with the substrate comprises a titanium nitride film of 0.2-3 µm in thickness having a granular structure, tool performance can be further improved by improving the adhesive force between the inner layer and the substrate. If this film thickness is less than 0.2 µm, the effect for improving adhesive force of the film is insufficient, and if the thickness exceeds 3µm, wear resistance lowers.

The abovementioned effects increase if the smooth surfaces comprises substantially aluminum oxide. This is because aluminum oxide is chemically stable in comparison with Ti (CwBxNyOz), and is low in properties of welding and adhesion to a workpiece and high in resistance against oxidative wear and diffusion wear. Furthermore, the effects of the alloy according to the invention increase when the aluminum oxide layer has an alpha crystal structure. Alpha aluminum oxide has a high-temperature stable type crystal structure, and is high in strength and heat resistance and effective as a coating film at the outermost layer directly contacted by a workpiece. The film thickness of aluminum oxide is preferably 0.5 through 15µm. If the film thickness is less than 0.5 µm, the effect of aluminum oxide cannot be obtained, and if the film thickness exceeds 15 µm, the strength of the coating layer decreases.

Aluminum oxide is generally black or brown, so that if aluminum oxide is applied to the whole surface of the outermost layer of the coating layer, it becomes difficult to distinguish used corners at the cutting site. In order to solve such a problem, it is preferable that the range in which aluminum oxide is exposed is limited so that aluminum oxide is locally set to be an outermost layer. That is, it is effective to apply TiN and ZrN in gold or TiCN and ZrCN in pink or orange on aluminum oxide as distinctive layers. The ranges for forming an aluminum oxide layer to be an outermost layer are a range of 2000 µm or less from the rake face side boundary of the blade-edge ridge toward the rake face side, and a range of 400µm or less from the flank side boundary of the blade-edge ridge toward the flank side. If they exceed these ranges, it becomes difficult to distinguish used corners. It is essential that distinctive layers are provided at portions other than these ranges.

Grinding by using a buff, brush, barrel, elastic grindstone or the like is preferable as a method for controlling the surface roughness of the surface of the hard coating layer to achieve a predetermined surface roughness. In addition, surface reforming by means of microblasting and ion-beam radiation may also be applied.

As for the method for forming a hard coating layer, physical vapor deposition (PVD) and chemical vapor deposition (CVD), which are generally known, can be used. Likewise, generally known deposition conditions of temperature and pressure can be employed.

### Brief Description of the Drawings

Figure 1 is a partial sectional view of a tool of the invention to which round honing is applied; and
Figure 2 is a partial sectional view of the tool of the invention to which chamfer-honing is applied.

### Best Mode for Carrying Out the Invention

Hereinafter, an embodiment of the invention is explained.

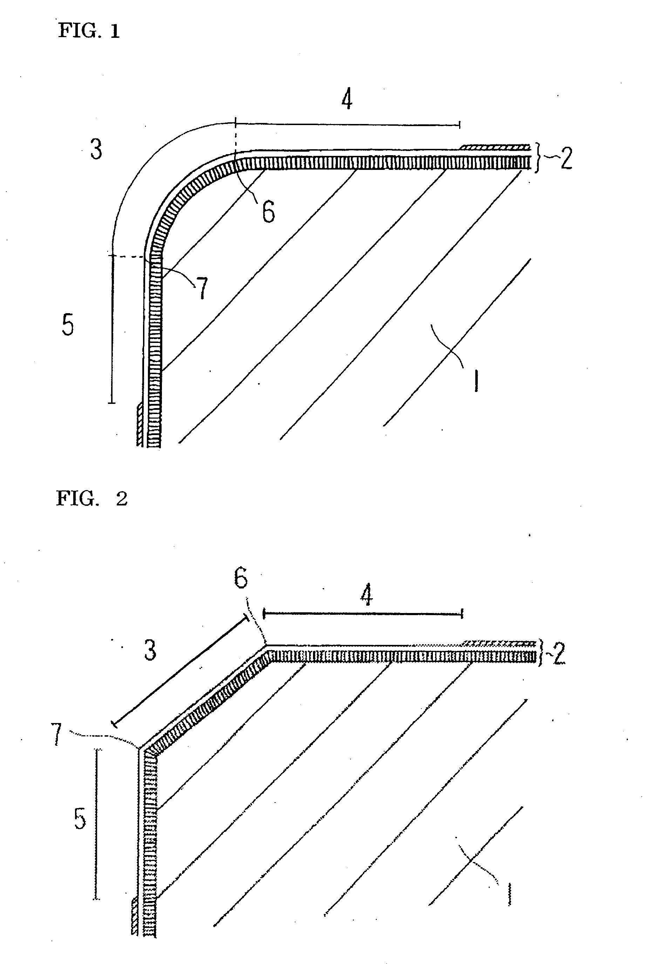

A tool according to the invention is explained in detail with reference to Figure 1 and Figure 2. Both figures are sectional views showing the vicinity of the blade-edge ridge of the tool. Hard coating layer 2 is formed on substrate 1 comprising a hard sintered alloy or cermet.

The face extending horizontally from a blade-edge ridge 3 is smooth surface 4 at the rake face side, and the face extending vertically from the blade-edge ridge 3 is smooth surface 5 at the flank side. In the tool of the present invention, the surface roughness of the hard coating layer 2 is controlled in the ranges of the blade-edge ridge 3, smooth surface 4 at the rake face side, and smooth surface 5 at the flank side. The boundary between the blade-edge ridge 3 and the smooth surface 4 of the rake face side is rake face side boundary 6 of the blade-edge ridge, and the boundary between the blade-edge ridge 3 and the smooth surface 5 of the flank side is flank side boundary 7 of the blade-edge ridge.

The blade-edge ridge 3 includes an edge-honing portion for preventing blade-edge chipping. Round-honing (Fig. 1) and chamfer-honing (Fig. 2) may be employed as edge-honing.

In Figure 1 and Figure 2, the hard coating layer includes a two-layered portion and a three-layered portion, and for example, the two-layered portion is constructed so as to have an outer layer formed from aluminum oxide, and the three-layered portion is constructed so as to have an outer layer formed from TiN as a distinctive layer. The two-layered portion is formed by partially eliminating the third layer by means of grinding.

### (Experimental example 1)

Cutting tips with a form of model No. SNMG120408 were manufactured from a sintered hard alloy with a composition of 87%WC-2%TiCN-3%TaNbC-8%Co (%: % by weight). Next, the whole of the cutting blade portion was subjected to honing at a width of 0.05mm viewed from the rake face side as edge machining to form a substrate. The flank of this substrate has an as-sintered surface.

This substrate surface was coated with TiN (0.5 µm), TiCN (10µm), a -Al₂O₃ (3 µm), and TiN (1.0µm) by means of normal CVD. Next, at the blade-edge ridge and the rake face side and flank side from the same ridge, grinding and lapping were applied by using artificial brushes with four hardnesses, and then surface roughness (Rmax) with respect to the reference length of 5µm was measured from a scanning electron microscope photograph of the cross-section of the tips. The results of the measurement are shown in Table I.

TiN (1.0µm) is at the outermost layer in the above-mentioned film structure. However, since grinding was applied at the blade-edge ridge and the rake face side and flank side from the same ridge, another layer can be exposed as an outermost layer in some tip samples. According to the invention, the whole TiCN is made of columnar crystals, and the whole TiN is made of granular crystals. These are found to be similar in other experimental examples described later.

By using the cutting tip samples thus manufactured, the wear resistance and the surface roughness of machined workpieces were evaluated under the following conditions. The results of evaluation are also shown in Table I.

### (Cutting conditions)

Workpiece: SCM415
Cutting rate: 200m/min
Depth of cut: 0.5mm
Feed: 0.25mm/rev
Cutting period: 30min
Cutting oil: dry cutting

**Table I**

| | Sample No. | Outermost layer quality / surface roughness (Rmax) | | | | Cutting performance | |
|---|---|---|---|---|---|---|---|
| | | Blade-edge ridge and range of 200 µm from the boundary R_{R} (µm) | Range between 200 µm and 500 µm from the boundary R_{R} (µm) | Range up to 50 µm from the boundary R_{F} toward flank side (µm) | Range between 100 µm and 200 µm from the boundary R_{F} toward the flank side (µm) | Roughness of machined surface (Rmax) µm | Flank wear (mm) |
| Present invention | 1-1 | Al₂O₃/0.15 | Al₂O₃/0.15 | Al₂O₃/0.18 | Al₂O₃/0.18 | 2.5 | 0.10 |
| | 1-2 | Al₂O₃/0.19 | TiN/0.25 | Al₂O₃/0.18 | TiN/0.26 | 6.5 | 0.18 |
| | 1-3 | TiN/0.18 | TiN/0.19 | TiN/0.16 | TiN/0.18 | 5.5 | 0.20 |
| | 1-4 | TiN/0.18 | TiN/0.26 | TiN/0.18 | TiN/0.3 | 7.0 | 0.22 |
| Comparative item | 1-5 | Al₂O₃/0.25 | TiN/0.38 | Al₂O₃/0.25 | TiN/1.33 | 12.0 | 0.45 |
| | 1-6 | Al₂O₃/0.18 | TiN/0.25 | TiN/0.35 | ← | 12.5 | 0.40 |
| | 1-7 | TiN/1.4 | ← | TiN/0.25 | ← | 12.8 | Chipping |
| | 1-8 | TiN/1.3 | ← | TiN/1.2 | ← | 13.8 | Chipping |

| | | | | | | | |
|---|---|---|---|---|---|---|---|
| * Herein, R_{R}: Rake face side boundary of the blade-edge ridge R_{F}: Flank side boundary of the blade-edge ridge | | | | | | | |

As shown in Table I, it is understood that the wear resistance and the surface roughness of the machined are significantly improved when the hard coating layer at the blade-edge ridge, a range of 200µm from the rake face side boundary of the same ridge toward the rake face side, and a range of 50 µm from the flank side boundary of the same ridge toward the flank side is set to be Rmax≤0.2 µm with respect to the reference length. Particularly, the larger the smooth surface of the hard coating layer, the greater the effect. It can be understood that aluminum oxide is more preferably used for the outermost layer of the hard coating layer.

### (Experimental example 2)

Cutting tips with a form of model No. CNMG120408 were manufactured from a sintered hard alloy with a composition of 88%WC-3%ZrCN-4%TaNbC-5%Co (%: % by weight). Next, for edge machining to prepare substrates, the whole of the cutting blade portion was subjected to honing in a width of 0.05mm viewed from the rake face side. The flank of this substrate is a sintered surface.

Cutting tip samples were manufactured by coating the surface of these substrates with TiN, TiC, TiCN, ZrCN, Al₂O₃, and others by means of normal chemical vapor deposition (CVD). Next, the blade-edge ridge and the rake face side and flank side from the same ridge were subjected to grinding and lapping by using an elastic grindstone, and then the surface roughness (Rmax) with respect to a reference length of 5 µm was measured from a scanning electron microscope photograph of the cross-section of the tips. The results of the measurement are shown in Table II.

By using the cutting tip samples thus manufactured, cutting was carried out under the following conditions and the wear resistance and the surface roughness of the machined workpieces were evaluated. The results of evaluation are also shown in Table II.

### (Cutting conditions)

Workpiece: FCD700
Cutting rate: 200m/min
Depth of cut: 0.5mm
Feed: 0.2mm/rev
Cutting period: 20 min
Cutting oil: Water-soluble

**Table II**

| | Sample No. | Structure of the hard coating layer (µm) (in order from the base metal) | Crystal condition of Al₂O₃ | Outermost layer quality / Surface roughness (Rmax) | | Cutting performance | |
|---|---|---|---|---|---|---|---|
| | | | | Blade-edge ridge and range of 200 µm from the boundary R_{R} (µm) | Range up to 50 µm from the boundary R_{F} toward the flank side (µm) | Roughness of machined surface (Rmax) µm | Flank wear (mm) |
| Present invention | 2-1 | TiN (0.5) TiCN (10) Al₂O₃ α (3.0) TiN (0.5) | α | Al₂O₃/0.19 | Al₂O₃/0.19 | 3.6 | 0.12 |
| | 2-2 | TiN (0.5) TiCN (10) TiCBNO (0.5) Al₂O₃ (3.0) TiN (0.5) | κ | Al₂O₃/0.18 | Al₂O₃/0.19 | 4.8 | 0.15 |
| | 2-3 | TiN (0.5) TiCN (10) TiBNO (1.0) Al₂O₃ (3.0) TiCN (0.5) | α | Al₂O₃/0.15 | TiCN/0.19 | 6.5 | 0.19 |
| | 2-4 | TiN (0.5) TiCN (3.5) TiC α (0.5) Al₂O₃ (12.0) ZrCN (0.5) | α | Al₂O₃/0.19 | ZrCN/0.19 | 7.0 | 0.18 |
| | 2-5 | TiN (0.5) TiCN (7.0) TiCO (0.5) Al₂O₃ (8.0) TiN (0.5) | κ | Al₂O₃/0.16 | TiN/0.19 | 7.8 | 0.23 |
| Comparative item | 2-6 | TiN (0.1) TiCN (7.0) Al₂O₃ (3.0) TiN (0.5) | α | Al₂O₃/1.8 | Al₂O₃/0.19 | 15.4 | Films spalling |
| Present invention | 2-7 | TiN (3.2) TiCN (7.5) Al₂O₃ (3.0) TiN (0.5) | α | Al₂O₃/0.19 | Al₂O₃/0.19 | 8.3 | 0.29 |
| | 2-8 | TiN (0.5) TiCN (25) Al₂O₃ α (3.0) TiN (0.5) | α | Al₂O₃/0.19 | Al₂O₃/0.19 | 8.9 | Slight chipping |
| | 2-9 | TiN (0.5) TiCN (10) Al₂O₃ (0.3) TiN (0.5) | α | Al₂O₃/0.19 | Al₂O₃/0.19 | 8.0 | 0.30 |
| | 2-10 | TiN (0.5) TiCN (10) Al₂O₃ (18.0) TiN (0.5) | κ | Al₂O₃/0.19 | Al₂O₃/0.19 | 8.6 | Slight chipping |

| | | | | | | | |
|---|---|---|---|---|---|---|---|
| * Herein, R_{R}: Rake face side boundary of the blade-edge ridge R_{F}: Flank side boundary of the blade-edge ridge | | | | | | | |

Analyzing Table II, when the base TiN layer is less than 0.2µm in thickness (No. 2-6), the film adhesive force decreases and film spalling occurs, and when the layer is more than 3µm in thickness (No. 2-7), wear resistance slightly decreases. In the former case, it is understood that the surface roughness of the machined workpiece deteriorates.

When the TiCN layer is more than 20 µm in thickness (No. 2-8) or when the Al₂O₃ layer is more than 15 µm in thickness (No. 2-10), micro-chipping occurs, and the surface roughness of the machined workpiece deteriorates slightly. On the other hand, it is understood that wear resistance decreases slightly when the thickness of the Al₂O₃ layer is less than 0.5 µm (No. 2-9).

### (Experimental example 3)

Cutting tips with a form of model No. SDKN1203 were manufactured from a sintered hard alloy with a composition of 81%WC-5%TiCN-4%TaNbC-10%Co (%: % by weight). Next, for edge machining to prepare substrates, the whole of the cutting blade portion was subjected to chamfer-honing in a width of 0.10mm viewed from the rake face side. The surface of the substrates partially includes an as-sintered surface and a ground surface.

Cutting tip samples were manufactured by coating the surface of the substrates with TiN, TiC, TiCN, TiAlN, Al₂O₃, and others by normal chemical vapor deposition (CVD) and physical vapor deposition (PVD)(herein, arc ion plating). Next, at the blade-edge ridge, rake face side and flank side, grinding and lapping were applied by using a brush, and then the surface roughness

(Rmax) with respect to the reference length of 5µm was measured from a scanning electron microscope photograph of the cross-section of the tips. The results of the measurement are shown in Table III.

By using the cutting tip samples thus manufactured, milling was carried out under the following conditions, and then the wear resistance and the surface roughness of the machined workpieces were evaluated. The results of evaluation are also shown in Table III.

### (Cutting conditions)

Cutter: FPG4160R
Workpiece: SCM435
Cutting rate: 250m/min
Depth of cut: 0.8mm
Feed: 0.25mm/blade
Cutting period: 30 min

**Table III**

| | Sample No. | Structure of the hard coating layer (µm) (in order from the base metal) | Coating method | Outermost layer quality / Surface roughness (Rmax) | | Cutting performance | |
|---|---|---|---|---|---|---|---|
| | | | | Blade-edge ridge and range of 200 µm from the boundary R_{R} (µm) | Range up to 50 µm from the boundary R_{F} toward the flank side (µm) | Roughness of machined surface (Rmax)µm | Flank wear (mm) |
| Present invention | 3-1 | TiN (0.5) TiCN (5) Al₂O₃(5.0)TiN (0.5) | CVD | Al₂O₃/0.19 | Al₂O₃/0.16 | 4.5 | 0.12 |
| | 3-2 | TiN (0.5) TiCN (3) TiCBNO (0.2) Al₂O₃ (1.0) TiN (0.5) TiAlN | CVD | TiCN/0.18 | TiCN/0.19 | 5.2 | 0.15 |
| | 3-3 | TiN (0.5) (3.0) TiN (0.5) | PVD | TiAlN/0.18 | TiN/0.15 | 7.0 | 0.19 |
| | 3-4 | TiN (0.5) Al₂O₃ (3.5) TiCN (0.5) | PVD | TiCN0.13 | TiCN0.15 | 7.5 | 0.18 |
| | 3-5 | TiN (0.5) TiCN (3.5) TiN (0.5) | PVD | TiCN/0.18 | TiN/0.19 | 7.2 | 0.23 |
| Comparative item | 3-6 | TiN (0.1) TiCN (5.0) Al₂O₃ (5.0) TiN (0.5) | CVD | Al₂O₃/1.8 | Al₂O₃/2.5 | 12.5 | Film spalling |
| | 3-7 | TiN (0.1) TiCN (5.0) Al₂O₃ (5.0) TiN (0.5) | CVD | Al₂O₃/0.19 | _{A}l₂O3/2.8 | 13.5 | 0.55 |
| | 3-8 | TiN (0.1) TiCN (5.0) Al₂O₃ (5.0) TiN (0.5) | CVD | Al₂O₃/2.6 | Al₂O₃/0.17 | 14.0 | Chipping |
| | 3-9 | TiN (0.5) TiAlN (3.0) TiN (0.5) | PVD | TiN/1.0 | TiN/1.3 | 11.5 | 0.40 |
| | 3-10 | TiN (0.5) TiAlN (3.5) TiCN (0.5) | PVD | TiCN/1.2 | TiCN/1.2 | 13.5 | 0.55 |

| | | | | | | | |
|---|---|---|---|---|---|---|---|
| * Herein, R_{R}: Rake face side boundary of the blade-edge ridge R_{F}: Flank side boundary of the blade-edge ridge | | | | | | | |

From Table III, it is understood that the cutting tool of the invention is excellent in wear resistance and machined surface quality even in the case of steel milling.

### (Experimental example 4)

Cutting tips with a form of model No. CNMG120408 were manufactured from a cermet alloy with a composition of 12%WC-65%TiCN-6%TaNbC-3%MO2C-7%Co-7%Ni (%: % by weight). Then, for edge machining to prepare substrates, the whole of the cutting blade portion was subjected to honing in a width of 0.06mm viewed from the rake face side. The flank of the substrates has an as-sintered surface.

Cutting tip samples were manufactured by coating the surface of the substrates with TiN, TiC, TiCN, TiAlN, Al₂O₃, and others by normal chemical vapor deposition (CVD) and physical vapor deposition (PVD)(herein, arc ion plating). Next, at the blade-edge ridge, rake face side, and flank side, grinding and lapping were applied by using an elastic grindstone, and then surface roughness (Rmax) with respect to the reference length of 5 µm was measured from a scanning electron microscope photograph of the cross-section of the tips. The results of the measurement are shown in Table IV.

By using the cutting tip samples thus manufactured, cutting was carried out under the following conditions, and the wear resistance and the surface roughness of the machined workpieces were evaluated. The results of the evaluation are also shown in Table IV.

### (Cutting conditions)

Workpiece: SCM415
Cutting rate: 300m/min
Depth of cut: 0.5mm
Feed: 0.25mm/rev
Cutting period: 15 min
Cutting oil: dry cutting

**Table IV**

| | Sample No. | Structure of the hard coating layer (µm) (in order from the base metal) | Coating method | Outermost layer quality / Surface roughness (Rmax) | | Cutting performance | |
|---|---|---|---|---|---|---|---|
| | | | | Blade-edge ridge and range of 200 µm from the boundary R_{R} (µm) | Range to 50 µm from the boundary R_{F} toward the flank side (µm) | Roughness of machined surface (Rmax) µm | Flank wear (mm) |
| Present invention | 4-1 | TiN (0.5) TiCN (3) Al₂O₃ (5.0) TiN (0.5) | CVD | Al₂O₃/0.15 | Al₂O₃/0.16 | 3.0 | 0.10 |
| | 4-2 | TiN (0.5) Al₂O₃ (1.5) TiN (0.5) | CVD | Al₂O₃/0.18 | Al₂O₃/0.18 | 5.5 | 0.11 |
| | 4-3 | TiN (0.5) TiAlN (3.0) TiN (0.5) | PVD | TiAlN/0.13 | TiAlN/0.13 | 6.8 | 0.17 |
| | 4-4 | TiN (0.5) TiCN (3.5) TiN (0.5) | PVD | TiCN/0.18 | TiCN/0.19 | 7.5 | 0.22 |
| Comparati ve item | 4-5 | TiN (0.5) TiCN (3) Al₂O₃ (5.0) TiN (0.5) | CVD | Al₂O₃/2.0 | Al₂O₃/2.2 | 12.5 | Chipping |
| | 4-6 | TiN (0.5) Al₂O₃ (1.5) TiN (0.5) | CVD | Al₂O₃/0.19 | Al₂O₃/1.5 | 12.0 | Chipping |
| | 4-7 | TiN (0.5) TiAlN (3.0) TiN (0.5) | PVD | TiAlN/1.2 | TiAlN/1.2 | 14.5 | 0.55 |
| | 4-8 | TiN (0.5) TiCN (3.5) TiN (0.5) | PVD | TiCN/0.2 | TiCN/1.2 | 11.5 | 0.75 |

| | | | | | | | |
|---|---|---|---|---|---|---|---|
| * Herein, R_{R}: Rake face side boundary of the blade-edge ridge R_{F}: Flank side boundary of the blade-edge ridge | | | | | | | |

As can be seen in Table IV, the cutting tool of the invention using cermet for the substrate is also excellent in wear resistance and machined surface quality in the case of finish machining for steel.

### Industrial Applicability

As described above, with the coated cutting tool of the invention, adherence of a workpiece due to welding hardly occurs when cutting, hence fracture resistance and wear resistance simultaneously can be achieved, and the tool life can be improved. Particularly, these effects are remarkable in the case of dry cutting. Furthermore, excellent surface quality of a machined workpiece also achieved, and this is suitable for high-accurate machining.

## Claims

1. A coated cutting tool with a hard coating layer formed on a substrate, wherein the substrate comprises a binder phase comprising one or more kinds of iron-group metals and a hard phase comprising one or more kinds of substances selected from the group consisting of carbides, nitrides, and oxides of the periodic table IVa-, Va-, and VIa-group elements, and solid solutions thereof, and the coating layer comprises a smooth face having a surface roughness (Rmax) of 0.2 µm or less (with a reference length of 5 µm when the surface roughness (Rmax) is measured by scanning electron microscopy) substantially at a blade-edge ridge, a range of 200 µm or more and 2000 µm or less from the rake face side boundary of the ridge toward the rake face side, and a range of 50 µm or more and 400 µm or less from the flank side boundary of the ridge toward the flank side, **characterised in that** the flank of the substrate has an as-sintered surface, and distinctive layers are provided at portions other than portions where the smooth face is formed.

2. A coated cutting tool according to Claim 1, wherein the hard coating layer comprises one or more kinds of substances selected from the group consisting of carbides, nitrides, carbonitrides, borides, and oxides of one or more kinds of metal elements selected from the periodic table IVa, Va, VIa groups, Al, and Si, and solid solutions thereof.

3. A coated cutting tool according to claim 2, wherein the hard coating layer comprises an inner layer comprising at least one or more layers of Ti (CwBxNyOz) herein, w+x+y+z=1, w,x,y,z≥0), a middle layer comprising an aluminium oxide layer, and an outer layer comprising TiCxNyO_{1-x-y} or ZrCxNyO_{1-x-y} (0≤x,y, x+y≤1).

4. A coated cutting tool according to any of claims 1 through 3, wherein the smooth face comprises an aluminium oxide layer.

5. A coated cutting tool according to any of claims 1 through 4, wherein the ranges of the smooth face are the blade-edge ridge, a range of at least 500 µm from the rake face side boundary of the ridge toward the rake face side and a range of at least 200 µm from the flank side boundary of the ridge toward the flank side.

6. A coated cutting tool according to any of claims 3 through 5, wherein the inner layer comprises titanium carbonitride with a film thickness of 2 to 20 µm having a columnar crystal structure.

7. A coated cutting tool according to any of claims 1 through 6, wherein an innermost layer contacting with the substrate comprises a titanium nitride film of 0.2 to 3µm in thickness having a granular structure.

8. A coated cutting tool according to any of claims 4 through 7, wherein the aluminium oxide layer comprises alpha aluminium oxide with a film thickness of 0.5 to 15 µm.

9. A coated cutting tool according to any of claims 1 through 8, wherein the substrate comprises cermet.

## Patentansprüche

1. Beschichtetes Schneidwerkzeug mit einer harten Überzugschicht, die auf einem Substrat ausgebildet ist, wobei das Substrat eine Bindemittelphase, die eine oder mehrere Art/en von Metallen der Eisengruppe umfasst, und eine harte Phase umfasst, die eine oder mehrere Art/en von Substanzen umfasst, die aus der Gruppe ausgewählt werden, die aus Karbiden, Nitriden und Oxiden der Elemente der Gruppen IVa, Va und VIa des Periodensystems und festen Lösung derselben besteht, und die Überzugsschicht eine glatte Fläche mit einer Oberflächenrauhigkeit (Rmax) von 0,2 µm oder weniger (mit einer Bezugslänge von 5 µm bei Messung der Oberflächenrauhigkeit (Rmax) mit Rasterelektronenmikroskopie) im Wesentlichen an einer Messerschneidenkante in einem Bereich von 200 µm oder mehr und 2000 µm oder weniger von der Grenze der Kante an der Spanflächen-Seite zu der Spanflächen-Seite hin sowie in einem Bereich von 50 µm oder mehr und 400 µm oder weniger von der Grenze der Kante an der Freiflächen-Seite zu der Freiflächen-Seite hin hat, **dadurch gekennzeichnet, dass** die Freifläche des Substrats eine As-Sintered-Fläche aufweist und separate Schichten an anderen Abschnitten als Abschnitten vorhanden sind, an denen die glatte Fläche ausgebildet ist.

2. Beschichtetes Schneidwerkzeug nach Anspruch 1, wobei die harte Überzugschicht eine oder mehrere Art/en von Substanzen umfasst, die aus der Gruppe ausgewählt wird/werden, die aus Karbiden, Nitriden, Karbonitriden, Boriden und Oxiden einer oder mehrerer Art/en von Metallelementen besteht, die aus den Gruppen IVa, Va, VIa des Periodensystems, Al und Si und festen Lösungen derselben ausgewählt werden.

3. Beschichtetes Schneidwerkzeug nach Anspruch 2, wobei die harte Überzugschicht eine innere Schicht, die wenigstens eine oder mehrere Schicht/en aus Ti ((CwBxNyOz), dabei w + x + y + z = 1, w, x, y, z ≥ 0), eine Mittelschicht, die eine Aluminiumoxidschicht umfasst, sowie eine äußere Schicht umfasst, die TiCxNyO_{1-x-y} oder ZrCxNyO_{1-x-y} (0 ≤ x, y, x + y ≤ 1) umfasst.

4. Beschichtetes Schneidwerkzeug nach einem der Ansprüche 1 bis 3, wobei die glatte Fläche eine Aluminiumoxidschicht umfasst.

5. Beschichtetes Schneidwerkzeug nach einem der Ansprüche 1 bis 4, wobei die Bereiche der glatten Fläche die Messerschneidenkante ein Bereich von wenigstens 550 µm von der Grenze der Kante an der Spanflächen-Seite zu der Spanflächen-Seite hin und ein Bereich von wenigstens 200 µm von der Grenze der Kante an der Freiflächen-Seite zu der Freiflächen-Seite hin sind.

6. Beschichtetes Schneidwerkzeug nach einem der Ansprüche 3 bis 5, wobei die innere Schicht Titan-Karbonitrid mit einer Schichtdicke von 2 bis 20 µm umfasst, das eine Säulenkristallstruktur hat.

7. Beschichtetes Schneidwerkzeug nach einem der Ansprüche 1 bis 6, wobei eine innerste Schicht, die mit dem Substrat in Kontakt kommt, einen Titan-Nitrid-Film mit einer Dicke von 0,2 bis 3 µm umfasst, der eine Kornstruktur hat.

8. Beschichtetes Schneidwerkzeug nach einem der Ansprüche 4 bis 7, wobei die Aluminiumoxidschicht α-Aluminiumoxid mit einer Schichtdicke von 0,5 bis 15 µm umfasst.

9. Beschichtetes Schneidwerkzeug nach einem der Ansprüche 1 bis 8, wobei das Substrat Cermet umfasst.

## Revendications

1. Outil de découpage revêtu avec une couche de revêtement dur formée sur un substrat, dans lequel le substrat comprend une phase de liant comprenant un ou plusieurs types de métaux du groupe du fer et une phase dure comprenant un ou plusieurs types de substances choisies dans le groupe constitué par les carbures, nitrures et oxydes des éléments des Groupes IVa, Va et VIa du Tableau Périodique, et leurs solutions solides, et la couche de revêtement comprend une face lisse ayant une rugosité de surface (Rmax) de 0,2 µm ou moins (avec une longueur de référence de 5 µm quand la rugosité de surface (Rmax) est mesurée par microscopie électronique à balayage) sensiblement au niveau de l'arête du tranchant de la lame, située dans la plage allant de 200 µm ou plus à 2000 µm ou moins en partant de la limite du côté face de vague de coupe de l'arête et en direction du côté face de vague de coupe, et située dans la plage allant de 50 µm ou plus à 400 µm ou moins en partant de la limite du côté dépouille de l'arête en direction du côté dépouille, **caractérisé en ce que** la face de dépouille du substrat a une surface sous sa forme telle que frittée, et des couches distinctives sont disposées en des parties autres que les parties où la surface lisse est formée.

2. Outil de découpage revêtu selon la revendication 1, dans lequel la couche de revêtement dur comprend un ou plusieurs types de substances choisies dans le groupe constitué par les carbures, les nitrures, les carbonitrures, les borures et les oxydes d'un ou plusieurs types d'éléments métalliques choisis parmi les Groupes IVa, Va, VIa du Tableau Périodique, Al et Si, et leurs solutions solides.

3. Outil de découpage revêtu selon la revendication 2, dans lequel la couche de revêtement dur comprend une couche intérieure comprenant au moins une ou plusieurs couches de Ti (CwBxNyOz) où w+x+y+z = 1, w,x,y,z ≥ 0), une couche médiane comprenant une couche d'oxyde d'aluminium, et une couche extérieure comprenant TiCxNyO_{1-x-y} ou ZrCxNyO_{1-x-y} (0 ≤ x,y, x+y ≤ 1).

4. Outil de découpage revêtu selon l'une quelconque des revendications 1 à 3, dans lequel la surface lisse comprend une couche d'oxyde d'aluminium.

5. Outil de découpage revêtu selon l'une quelconque des revendications 1 à 4, dans lequel les plages de la face lisse sont, pour l'arête du tranchant de la lame, une plage d'au moins 550 µm en partant de la limite du côté face de vague de coupe de l'arête et en direction du côté face de vague de coupe, et une plage d'au moins 200 µm en partant de la limite du côté dépouille de l'arête en direction du côté dépouille.

6. Outil de découpage revêtu selon l'une quelconque des revendications 3 à 5, dans lequel la couche intérieure comprend du carbonitrure de titane avec une épaisseur de film de 2 à 20 µm, ayant une structure cristalline basaltique.

7. Outil de découpage revêtu selon l'une quelconque des revendications 1 à 6, dans lequel la couche la plus intérieure venant au contact du substrat comprend un film de nitrure de titane ayant une épaisseur de 0,2 à 3 µm et ayant une structure granulaire.

8. Outil de découpage revêtu selon l'une quelconque des revendications 4 à 7, dans lequel la couche d'oxyde d'aluminium comprend de l'α-oxyde d'aluminium avec une épaisseur de film de 0,5 à 15 µm.

9. Outil de découpage revêtu selon l'une quelconque des revendications 1 à 8, dans lequel le substrat comprend un cermet.
